# EUROPÄISCHE PATENTSCHRIFT

(11) **EP 1 250 394 B1**
(45) Veröffentlichungstag und Bekanntmachung des Hinweises auf die Patenterteilung: **22.06.2005**
(21) Anmeldenummer: 00981371.8
(22) Anmeldetag: 13.12.2000
(51) Int. Cl.: C09J 175/06, C08G 18/42, C08G 18/12

(54) **POLYURETHAN-ZUSAMMENSETZUNGEN AUF DER BASIS VON POLYESTER-POLYETHER-COPOLYMEREN**
POLYURETHANE COMPOSITIONS ON THE BASIS OF POLYESTER-POLYETHER COPOLYMERS
COMPOSITIONS DE POLYURETHANNE A BASE DE COPOLYMERES DE POLYESTER-POLYETHER

(30) Priorität: 22.12.1999 DE 19961941
(43) Veröffentlichungstag der Anmeldung: 23.10.2002
(73) Patentinhaber: Henkel Kommanditgesellschaft auf Aktien, 40191 Düsseldorf (DE)
(72) Erfinder: KREBS, Michael, 40724 Hilden (DE); LOHR, Christoph, 42117 Wuppertal (DE); BRENGER, Andreas, 40221 Düsseldorf (DE)
(86) Internationale Anmeldenummer: PCT/EP2000/012659
(87) Internationale Veröffentlichungsnummer: WO 2001/046330

(56) Entgegenhaltungen:
- DE-A- 19 504 007
- US-A- 4 781 986
- US-A- 5 441 808

## Beschreibung

Die Erfindung betrifft Zusammensetzungen enthaltend Umsetzungsprodukte eines Polyisocyanats mit einem Polyester-Polyether-Copolymer sowie deren Verwendung als Schmelzklebstoff und ein Verfahren zu deren Herstellung.

Umsetzungsprodukte eines stöchiometrischen Überschusses von Polyisocyanaten mit Polyolen - sogenannte Polyurethan-Prepolymere mit Isocyanat-Endgruppen - finden Anwendung in einer Vielzahl von Gebieten beispielsweise als Dichtstoffe, Beschichtungsmaterialien oder Klebstoffe. Wenn diese Zusammensetzungen bei Raumtemperatur fest sind und unter Ausschluß von Feuchtigkeit in der Wärme bzw. Hitze schmelzbar sind, können sie als reaktive Schmelzklebstoffe eingesetzt werden. Reaktive einkomponentige Polyurethan-Schmelzklebstoffe im Sinne dieser Erfindung sind also feuchtigkeitshärtende bzw. feuchtigkeitsvemetzende Klebstoffe, die bei Raumtemperatur fest sind und in Form ihrer Schmelze als Klebstoff appliziert werden, und deren polymere Bestandteile Urethangruppen sowie reaktionsfähige Isocyanatgruppen enthalten. Durch das Abkühlen dieser Schmelze über dem Auftrag auf das Substrat und dem weiteren Kühlen der Schmelze durch die Substrat-Teile erfolgt zunächst eine rasche physikalische Abbindung des Schmelzklebstoffes durch dessen Erstarren, gefolgt von einer chemischen Reaktion der noch vorhandenen Isocyanatgruppen mit Feuchtigkeit aus der Umgebung zu einem vernetzten unschmelzbaren Klebstoff.

Reaktive Schmelzklebstoffe auf der Basis von Isocyanat-terminierten PolyurethanPrepolymeren sind im Prinzip bekannt, so beschreiben H.F. Huber und H. Müller in "Shaping Reactive Hotmelts Using LMW Copolyesters", Adhesives Age, November, 1987, Seite 32 bis 35 die Kombination von Isocyanat-terminierten amorphen und kristallinen Polyestern, die gute Haftung zu den verschiedensten Substraten haben sollen. Formulierungen, die Isocyanat-terminierte Polyester-Polyether-Copolymere enthalten, werden nicht offenbart.

Die EP-A-340906 beschreibt Polyurethan-Schmelzklebstoffzusammensetzungen, enthaltend eine Mischung von mindestens 2 amorphen Polyurethanprepolymeren, die dadurch gekennzeichnet sind, daß die Prepolymeren unterschiedliche Glasübergangstemperaturen haben. Derartige Mischungen von zwei Prepolymeren sollen die Eigenschaften des Klebstoffes dahingehend verbessern, daß sie schnell abbinden, unmittelbar nach dem Abbinden noch flexibel sind und nach dem Aushärten eine gute Hitzestabilität haben.

Die DE-A-3827224 beschreibt rasch abbindende, feuchtigkeitshärtende Schmelzklebstoffe aus Umsetzungsprodukten von Polyisocyanaten und Hydroxypolyestern. Die Hydroxypolyester sind dabei bevorzugt rein aliphatisch und weisen mindestens 12 Methylengruppen in der Polyestereinheit aus Diol und Dicarbonsäure auf. Als Diole können dabei auch Etherdiole, das heißt oligomere bzw. Polymere auf Basis Ethylenglycol oder Butandiol-1,4 enthalten sein, dies ist jedoch nicht bevorzugt.

Die EP-A-455400 beschreibt eine Mischung aus Isocyanat-terminierten Polyurethanprepolymeren, die im Wesentlichen aus einem ersten kristallinen Prepolymer basierend auf Polyhexamethylenadipat und einem zweiten Prepolymeren basierend auf Polytetramethylenetherglycol besteht. Es wird angegeben, daß diese Zusammensetzungen sehr gute Haftung auf einer Vielzahl von Oberflächen haben soll.

Die EP-A-568607 beschreibt eine Mischung von Isocyanat-terminierten Polyurethanprepolymeren enthaltend ein erstes Prepolymer basierend auf dem Reaktionsprodukt eines wenigstens teilkristallinen Polyesterpolyols und einem Polyisocyanat und einem zweiten Prepolymer basierend auf dem Reaktionsprodukt eines Poly(tetramethylenether)glycols und einem Polyisocyanat sowie einem dritten Prepolymer basierend auf dem Reaktionsprodukt aus einem amorphen Polyesterpolyol und einem Polyisocyanat. Vorzugsweise soll das amorphe Polyesterpolyol für das dritte Prepolymer zumindest anteilweise aus aromatischen Bausteinen aufgebaut sein. Um die kohäsive Festigkeit der Schmelzklebstoffe zu verbessern, soll das Molekulargewicht, insbesondere des glasartigen Polyesterpolyols möglichst hoch sein. Dies resultiert jedoch in extrem hochviskosen Polymeren, die schwierig zu mischen sind und schwierig bei der Anwendungstemperatur zu applizieren sind. Es wird angegeben, daß diese Schmelzklebstoffe besonders geeignet sind um polymere Substrate wie Polystyrol oder Polymethylmethacrylat zu verkleben.

Die WO 9115530 beschreibt feuchtigkeitshärtende Polyurethanschmelzklebstoffe, die die Eigenschaften von thermoplastischen Schmelzklebstoffen und reaktiven Klebstoffen vereinigen. Es werden Mischungen aus einem thermoplastischen Elastomer auf der Basis eines Polyester-Polyether-Copolymers und einem Polyisocyanatprepolymer beschrieben. Dabei soll das thermoplastische Elastomer ein segmentiertes thermoplastisches Elastomer mit harten und weichen Segmenten sein und das Polyisocyanatprepolymer soll das Reaktionsprodukt eines Polyols mit einem polyfunktionellen Isocyanat mit einer Isocyanatfunktionalität von 2 oder mehr sein. Ein bevorzugtes Polyol für das Polyurethanprepolymer ist das Poly(tetramethylenether)glycol. Es wird angegeben, daß diese Klebstoffe zur Verklebung von Glas, Metall und einer Reihe von Kunststoffen geeignet sind.

Trotz des umfangreichen Standes der Technik besteht weiterhin Bedarf an verbesserten Polyurethan-Zusammensetzungen, die sich für den Einsatz als Schmelzklebstoffe eignen. Insbesondere sollen die für die Schmelzklebstoffe eingesetzten Rohstoffe leicht und kostengünstig zugänglich sein. Eine bessere Verträglichkeit der einzelnen Polymerkomponenten ist für eine problemlose Applikation wünschenswert. Außerdem sollen die Schmelzklebstoffe ein breites Adhäsionsspektrum zu einer Vielzahl von Substraten haben und ein möglichst hohes Festigkeitsniveau nach der Aushärtung.

Die erfindungsgemäße Lösung der Aufgabe ist den Patentansprüchen zu entnehmen. Sie besteht im Wesentlichen in der Bereitstellung einer Polyurethan-Zusammensetzung für die Anwendung in Schmelzklebstoffen enthaltend ein Umsetzungsprodukt eines Polyisocyanats mit einem Polyester-ether-Copolymer der Formel (I) oder (II)

**HO-R**^{**2**}**-[-O-A-O-R**^{**1**}**-]**_{**n**}**-OH (I)**

**HO-R**^{**3**}**-B-E-B-R**^{**3**}**-OH (II)**

wobei 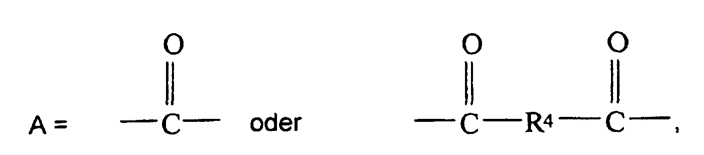 R¹ und R² unabhängig voneinander -(CH₂)ₘ-, (-(CH₂)₄-O-(CH₂)₄-)ₒ, (-C₃H₆-O-C₃H₆-)ₒ , (-C₂H₄-O-C₂H₄-)ₚ oder deren Kombination und R³ -(CH₂)ₘ-, -(C₂H₄-O-C₂H₄)ₒ- oder -(C₃H₆-O-C₃H₆)ₒ-,
B der Block eines Carboxyl-terminierten Polyesters oder B und R³ zusammen der Rest eines Polycaprolactons,
E der Block eines Poly(oxytetramethylen)glycols, Poly(oxypropylen)glycols, Poly(oxyethylen)glycols oder deren Copolymeren,
R⁴ ein C₁ bis C₁₂ - Alkyl- oder ein Rest eines Carboxyl-terminierten Polyesters nach Entfernen der Carboxylgruppen bedeuten und
n = 1 bis 30, m = 2 bis 12, o = 5 - 80 und p = 5 - 80 ist.

Im einfachsten Fall besteht dabei in der Formel (I) das Polyester-Ether-Copolymer aus den Aufbaukomponenten einer aliphatischen oder aromatischen Dicarbonsäure mit 3 bis 14 Kohlenstoffatomen und einem Poly(oxytetramethylen)glycol, Polypropylenglycol, Polyethylenglycol oder Copolymeren aus Ethylenoxid und Propylenoxid. Vorzugsweise ist A jedoch der Rest eines Carboxyl-terminierten Polyesters aufgebaut aus aliphatischen und/oder aromatischen Dicarbonsäuren und difunktionellen Alkoholen. Bevorzugte Beispiele für aliphatische und aromatische Dicarbonsäuren sind Adipinsäure, Pimelinsäure, Korksäure, Azelainsäure, Sebacinsäure, Undecandisäure, Dodecandisäure, Phthalsäure, Terephthalsäure, Isophthalsäure oder deren Mischungen. Bevorzugte Beispiele für difunktionelle Alkohole sind Ethylenglycol, Propylenglycol, Butandiol, Diethylenglycol, Triethylenglycol, Dipropylenglycol, Tripropylenglycol, Hexandiol, Octandiol, Decandiol, Dodecandiol oder deren Mischungen.

In einer weiteren Ausführungsform kann der Block A auch eine Carbonylgruppe darstellen, das heißt es handelt sich um den Kohlensäureester eines Poly(oxytetramethylen)glycols, Poly(oxypropylen)glycols oder Poly(oxyethylen)glycols.

Besonders bevorzugte Carboxyl-terminierte Polyesterbausteine sind Polyesterbausteine aus Adipinsäure, Sebacinsäure oder Dodecandisäure und 1,6-Hexandiol, 1,8-Octandiol, 1,10-Decandiol oder 1, 12-Dodecandiol. Der Polyesterblock kann dabei ein Molekulargewicht zwischen 600 und 6000 haben, vorzugsweise liegt das Molekulargewicht zwischen 1000 und 4000. Der Block des Poly(oxytetramethylen)glycols, auch Poly-tetrahydrofuran (Poly-THF) genannt, kann zwischen 250 und 6000, vorzugsweise zwischen 600 und 4000 liegen. Wenn der Polyetherblock aus Poly(oxypropylen)glycol, Poly(oxyethylen)glycol oder deren Copolymeren besteht, hat er ein Molekulargewicht zwischen 1000 und 6000, vorzugsweise zwischen 1000 und 4000.

Eine weitere bevorzugte Ausführungsform des Polyester-ether-copolymers gemäß Formel (II) ist aus einem zentralen Poly-THF-Block E und zwei hydroxyterminierten Polyesterblöcken, gebildet durch B, R³ und die Hydroxylgruppe, aufgebaut. Dabei können B und R³ auch zusammen den Rest eines Polycaprolactons bedeuten, das heißt hier handelt es sich um ein Umsetzungsprodukt eines Poly-THF mit einem beidseitig auf die Hydroxylgruppen aufpolymerisierten Polycaprolacton. Der Poly-THF-Block kann den oben genannten Molekulargewichtsbereich aufweisen, jeder Polycaprolactonblock kann dabei ein Molekulargewicht von 1000 bis 4000 aufweisen. Der gesamte Polyester-Polyether gemäß Formel (II) hat dann ein Molekulargewicht zwischen 2000 und 8000, vorzugsweise zwischen 3000 und 7000. Auch in diesem Fall kann der Polyetherblock alternativ aus einem Poly(oxypropylen)glycol, Poly(oxyethylen)glycol oder deren Copolymeren bestehen. Bezüglich des bevorzugten Molekulargewichtsbereiches gilt das im vorherigen Absatz gesagte.

Die Hydroxylzahlen der einzusetzenden Polyester-Polyether-Copolymeren liegen im Bereich zwischen 5 und 40, vorzugsweise zwischen 10 und 30. Dabei ist bei den Polyester-Polyether-Copolymeren der Formel (I) das molare Verhältnis zwischen Polyether-Block und Polyester-Block etwa 1 zu 9, der Massenanteil des Polyether zur Polyester beträgt etwa 50%. Vorzugsweise wird das Copolymer der Formel (I) durch Kondensation eines entsprechenden carboxylterminierten Polyesters mit einem Polyether hergestellt. Prinzipiell ist es jedoch auch möglich ein derartiges Copolymer durch Kondensation der Einzelkomponenten Polyetherpolyol, aliphatische Dicarbonsäure und difunktioneller Alkohol in einem einzigen Kondensationsschritt herzustellen.

Als Polyisocyanate können eine Vielzahl von aliphatischen, cycloaliphatischen oder aromatischen Polyisocyanaten eingesetzt werden.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-Diisocyanat, Diphenylmethan-4,4'-Diisocyanat (MDI), Diphenylmethan-2,4'-Diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyl-dimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat. Beispiele für geeignete cycloaliphatische Polyisocyanate sind die Hydrierungsprodukte der vorgenannten aromatischen Diisocyanate wie z.B. das 4,4'-Dicyclohexylmethandiisocyanat (H₁₂MDI), 1-Isocyanatomethyl-3-Isocyanato-1,5,5-Trimethyl-cyclohexan (Isophoron-Diisocyanat, IPDI), Cyclohexan-1,4-Diisocyanat, hydriertes Xylylen-Diisocyanat (H₆XDI), 1-Methyl-2,4-diisocyanato-cyclohexan, m- oder p-Tetramethylxylendiisocyanat (m-TMXDI, p-TMXDI) und Dimerfettsäure-Diisocyanat. Beispiele für aliphatische Polyisocyanate sind Tetramethoxybutan-1,4-diisocyanat, Butan-1,4-diisocyanat, Hexan-1,6-Diisocyanat (HDI), 1,6-Diisocyanato-2,2,4-Trimethylhexan, 1,6-Diisocyanato-2,4,4-Trimethylhexan sowie 1,12-Dodecandiisocyanat (C₁₂DI).

Die erfindungsgemäßen Polyurethan-Schmelzklebstoff-Zusammensetzungen können ggf. noch weitere Prepolymere in Form von Umsetzungsprodukten eines der oben genannten Polyisocyanate mit einem Polyesterpolyol und/oder ggf. einem Umsetzungsprodukt eines der oben genannten Polyisocyanate mit einem Polyetherpolyol enthalten.

Beispiele für derartige Polyesterpolyole sind Umsetzungsprodukte von Dicarbonsäuren, wie Glutarsäure, Adipinsäure, Pimelinsäure, Korksäure, Azelainsäure, Sebacinsäure, Undecandisäure, Dodecandisäure, 3,3-Dimethylglutarsäure,Terephthalsäure, Isophthalsäure, Dimerfettsäure oder deren Mischungen mit niedermolekularen difunktionellen Alkoholen wie z.B. Ethylenglykol, Propylenglykol, 1,4-Butandiol, 1,6-Hexandiol, 1,8-Octandiol, 1,10-Decandiol, 1,12-Dodecandiol, Dimerfettalkohol, Diethylenglykol, Triethylenglykol oder deren Mischungen. Ggf. können die geeigneten Polyesterpolyole auch leicht verzweigt sein, d.h. zu ihrer Herstellung wurden untergeordnete Mengen einer Tricarbonsäure bzw. eines trifunktionellen Alkohols, z.B. Glycerin oder Trimethylolpropan, mitverwendet. Eine weitere Gruppe der erfindungsgemäß mit einzusetzenden Polyester-Polyole sind die Polyester auf der Basis von ε-Caprolacton, auch "Polycaprolactone" genannt. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate.

Beispiele für die erfindungsgemäß mitzuverwendenden Polyetherpolyole für die weiteren Prepolymeren sind di- und/oder trifunktionelle Polypropylenglycole im Molekulargewichtsbereich von 200 bis 15000, vorzugsweise im Bereich von 400 bis 4000. Es können auch statistische und/oder Blockcopolymere des Ethylenoxids und Propylenoxids eingesetzt werden.

Die Umsetzung der einzelnen Polyolbausteine gemäß Formel (I) oder (II) oder des weiteren Polyesterpolyols oder des Polyetherpolyols mit dem Polyisocyanat erfolgt in an sich bekannter Weise durch Umsatz eines stöchiometrischen Überschusses an Polyisocyanat gegenüber der Polyolverbindung. Üblicherweise trägt das stöchiometrische Verhältnis von OH-Gruppen zu NCO-Gruppen 1:1,2 bis 1:15, vorzugsweise beträgt dieses Verhältnis 1:2 bis 1:5.

Zur Herstellung der Isocyanat-terminierten Polyurethanprepolymeren kann es notwendig sein, an sich bekannte Polyurethan-Katalysatoren zuzusetzen wie z.B. Verbindungen des 2- bzw. 4-wertigen Zins, insbesondere Dicarboxylate des 2-wertigen Zinns bzw. Dialkylzinn-dicarboxylate bzw. Dialkylzinn-dialkoxylate einzusetzen.

Weiterhin kann es notwendig sein den Schmelzklebstoff-Zusammensetzungen zur beschleunigten Aushärtung mit der Feuchtigkeit der Umgebung Katalysatoren zuzusetzen, hier seien insbesondere acyclische als auch insbesondere cyclische Aminoverbindungen genannt, beispielhaft erwähnt sei Tetramethylbutan-diamin, Bis(Dimethylaminoethyl)ether, 1,4-Diazabicyclooctan (DABCO), 1,8-Diaza-bicyclo-(5.4.0)-undecen oder Morpholino-Derivate zuzusetzen. Beispiele für derartige Morpholino-Derivate sind:

Bis(2-(2,6-dimethyl-4-morpholino) ethyl)-(2-(4-morpholino) ethyl) amin, Bis(2-(2,6-dimethyl-4-morpholino) ethyl)-(2-(2,6-diethyl-4-morpholino) ethyl) amin, Tris(2-(4-morpholino) ethyl) amin, Tris(2-(4-morpholino) propyl) amin, Tris(2-(4-morpholino) butyl) amin, Tris(2-(2,6-dimethyl-4-morpholino) ethyl) amin, Tris(2-(2,6-diethyl-4-morpholino) ethyl) amin, Tris(2-(2-methyl-4-morpholino) ethyl) amin oder Tris(2-(2-ethyl-4-morpholino) ethyl) amin, Dimethylaminopropylmorpholin, Bis-(morpholinopropyl)-methylamin, Diethylaminopropylmorpholin, Bis-(morpholinopropyl)-ethylamin, Bis-(morpholinopropyl)-propylamin, Morpholinopropylpyrrolidon oder N-Morpholinopropyl-N'-methyl-piperazin, 2,2'-Dimorpholinodiethylether (DMDEE) oder Di-2,6-dimethylmorpholinoethyl)ether

Weiterhin können die erfindungsgemäßen Zusammensetzungen weitere für Schmelzklebstoffe übliche Zusätze enthalten, beispielhaft erwähnt seien hier klebrig machende Harze, wie z.B. Abietinsäure, Abietinsäureester, Terpenharze, Terpenphenolharze oder Kohlenwasserstoffharze. Weiterhin können unter Umständen in untergeordneten Mengen Füllstoffe eingesetzt werden, z.B. Silikate, Talk, Calciumcarbonate, Tone, Ruß oder Farbpasten bzw. Pigmente.

Die Auswahl der Einzelkomponenten, insbesondere der Polyolkomponenten richtet sich nach dem Anwendungszweck und den erwünschten Endeigenschaften. Es wurde gefunden, daß durch die Blockstruktur der Polyester-ether-copolymeren gemäß Formel (I) bzw. (II) eine verbesserte Verträglichkeit gegenüber Poly-THF-basierenden Schmelzklebstoffen des Standes der Technik erzielt werden, dies ist daran zu erkennen, daß die erfindungsgemäßen Schmelzklebstoff-Zusammensetzungen in der Regel transparent sind (solange sie keine Füllstoffe, Pigmente oder ähnliche Komponenten enthalten). Weiterhin wurden mit den erfindungsgemäßen Zusammensetzungen exzellente Kriechbeständigkeit und Grenzflächen-Haftungswerte beobachtet und zusätzlich sehr hohe Festigkeitswerte erzielt.

Die erfindungsgemäßen Schmelzklebstoffe eignen sich zur Verklebung einer Vielzahl von Substraten, insbesondere zur Verklebung von metallischen Substraten und ganz besonders zur Verklebung diverser Kunststoff-Substrate.

Beispiele für bevorzugte Anwendungsfelder der erfindungsgemäßen Schmelzklebstoffe sind die Montageverklebung in der Holz- und Möbelindustrie, die Clipsverklebung im Automobilbau. Bei letztgenanntem Anwendungsfeld werden die Clipse, auch "Retainer" genannt, aus ABS gegen harzgebundene Formteile, wie sie z.B. unter dem Handelsnamen "Empeflex" der Firma Empe im Handel sind, geklebt. Ein weiteres Anwendungsfeld ist die Profilummantelung im Holz-, Möbel- und Fensterbau. Hierbei werden PVC-Profile vollflächig mit PVC-Dekorfolien verklebt.

Die nachfolgenden Beispiele sollen die Erfindung näher erläutem. Bei den Zusammensetzungen sind dabei alle Mengenangaben Gewichtsteile, wenn nicht anders angegeben.

### Beispiele

Aus den Aufbaukomponenten, 1,6-Hexandiol, 1,4-Butandiol, Poly-THF 2000, Poly-THF 1000, Adipinsäure und/oder Dimethylterephthalat und/oder Polypropylenglycol 1000 wurden Polyether-Polyesterpolyole nach einem herkömmlichen Kondensationsverfahren hergestellt, bis die in Tabelle 1 angegebene Hydroxylzahl erreicht wurde. In der Tabelle sind die molaren Verhältnisse der Aufbaukomponenten sowie der Gewichtsanteil (in Gew.%) des Polyetherblocks aufgeführt.

**Tabelle 1**

| | ***Molverhältnis*** | | | | | | | | |
|---|---|---|---|---|---|---|---|---|---|
| Beispiel | Hexandiol | Butandiol | PTHF 2000 | PTHF 1000 | PPG 1000 | Adipin säure | Dimethyltere phthalat | OHZ | %Polyether |
| 1 | 15,1 | - | 1 | - | - | 14,9 | - | 23 | 37 |
| 2 | 11,6 | - | 1 | - | - | 11,2 | - | 34 | 43,5 |
| 3 | 11,6 | - | 1 | - | - | 11,2 | - | 28 | 43,5 |
| 4 | 9 | - | 1 | - | - | 9 | - | 25 | 50 |
| 5 | 9 | - | 1 | - | - | 9 | - | 14 | 50 |
| 6 | 7 | - | 1 | - | - | 7 | - | 25 | 55,5 |
| 7 | 2,1 | - | 1 | - | - | 2,4 | - | 17 | 80 |
| 8 | 2,1 | - | 1 | - | - | 2,4 | - | 11 | 80 |
| 9 | - | 10,2 | 1 | - | - | 9,9 | - | 27 | 50 |
| 10 | - | 10,2 | 1 | - | - | 9,9 | - | 23 | 50 |
| 11 | - | 1,7 | - | 1 | - | - | 2 | 48 | 71 |
| 12 | - | 1,7 | - | - | 1 | - | 2 | 42 | 71 |
| Anmerkungen | | | | | | | | | |
| PTHF2000: Poly-THF, Molekulargewicht 2000 | | | | | | | | | |
| PTHF1000: Poly-THF, Molekulargewicht 1000 | | | | | | | | | |
| PPG1000: Polypropylenglycol, Molekulargewicht 1000 | | | | | | | | | |
| OHZ Hydroxylzahl (mg KOH gemäß DIN 53240) | | | | | | | | | |
| %Polyether Gew%- Anteil des Polyether-blocks im Polyetherester | | | | | | | | | |

Aus den vorstehend aufgeführten Polyether-Polyesterpolyolen, handelsüblichen Polyesterpolyolen auf Basis Dodecandisäure/1,6-Hexandiol bzw. Adipinsäure/1,6-Hexandiol und 4,4'-Diphenylmethandiisocyanat wurden Schmelzklebstoff-Zusammensetzungen hergestellt und auf einige wesentliche Kennzahlen wie Viskosität und Kriechbeständigkeit getestet. Zum Vergleich wurde ein Schmelzklebstoff gemäß der Lehre der EP-A-455400 aus Poly-THF 2000, einem Polyester aus Hexandioladipat und einem Polyester aus Dodecandisäure/1,6-Hexandiol und 4,4'-MDI hergestellt. Wie aus der nachfolgenden Tabelle 2 ersichtlich ist, weisen die erfindungsgemäßen Schmelzklebstoffe im Vergleich zum Stand der Technik eine wesentlich höhere Kriechbeständigkeit auf.

Die Kriechbeständigkeit eines Polyurethan(PUR)-Hotmelts wird dabei wie folgt bestimmt, es werden zwei überlappte Substrate aus unterschiedlichen Materialien (Holz gegen ABS) miteinander verklebt. Bei dem Holzprüfkörper handelt es sich um Buchensperrholz-Prüfkörper der Abmessung 10 x 100 mm, bei dem ABS-Prüfkörper betragen die Dimensionen 25 x 100 mm, als ABS wird handelsübliche Plattenware der Firmen Bayer oder Dow verwendet. Unter Zuhilfenahme einer Schablone wurde eine Verklebungsfläche von 10 x 10 mm mit dem zu prüfenden Schmelzklebstoff beschichtet. Anschließend wurden die beiden Substratteile sofort gefügt und mit einer Reagenzglasklammer zusammengepresst. Die Presszeit betrug 3 Minuten. Nach Ablauf der Anpresszeit wurde am Ende des Holzteils des Prüfkörpers ein Gewicht befestigt und der Prüfkörper samt Gewicht freischwebend senkrecht am anderen Ende aufgehängt. Es wurde das Gewicht ermittelt, bei dem der Prüfkörper innerhalb 30 Minuten nicht auseinander fiel.

**Tabelle 2**

| Polyol | **Beispiel** | | | | | | |
|---|---|---|---|---|---|---|---|
| | **Vergleich** | **13** | **14** | **15** | **16** | **17** | **18** |
| PTHF2000 | 27 | | | | | | |
| HMA | 52 | 19 | 53 | 50 | 50 | 50 | 50 |
| HDDA | 8 | 8 | 8 | | | | |
| Polyetherester 5 | | 60 | | | | | |
| Polyetherester 10 | | | 60 | | | | |
| Polyetherester 11 | | | | 30 | 25 | | |
| Polyetherester 12 | | | | | | 25 | 17,5 |
| NCO-KZ mit MDI | 1,6 | 1,7 | 1,6 | 2 | 1,8 | 1,8 | 1,8 |
| Viskosität bei 130°C | 11 | 43 | 36 | 9,1 | 11,3 | 8,4 | 9,8 |
| Kriechtest [kg/cm²] | 3 | 3,5 | 3,7 | 4 | 4 | 4 | 4 |
| Anmerkungen | | | | | | | |
| HMA Polyhexamethylenadipat, OHZ 30,5 | | | | | | | |
| HDDA Polyesterol aus Dodecandisäure und 1,6-Hexandiol, OHZ 30 | | | | | | | |
| OHZ Hydroxylzahl (mg KOH gemäß DIN 53240) | | | | | | | |
| PTHF2000: Poly-THF, Molekulargewicht 2000 | | | | | | | |
| NCO-KZ NCO:OH Verhältnis, eingesetztes Isocyanat: 4,4'-MDI | | | | | | | |
| Viskosität in Pa.s, Brookfield Thermocell | | | | | | | |

## Patentansprüche

1. Polyurethan Schmelzklebstoffzusammensetzung enthaltend ein Umsetzungsprodukt eines Polyisocyanats im stöchiometrischen Überschuss
a.) mit einem polyester-ether-Copolymer der Formel (I) oder (II)
O-R²-[-O―A―O―R¹-]ₙ-OH (I)
HO-R³-B-E-B-R³-OH (II)
und
b.) ggf. mit einem Polyesterpolyol und/oder.
c.) ggf. mit einem Polyetherpolyol,
wobei 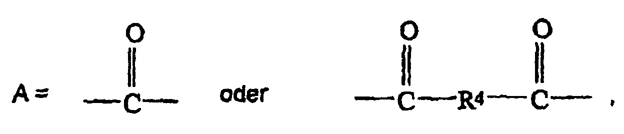
R¹ und R² unabhängig voneinander -(CH₂)ₘ-, (-(CH₂)₄-O-(CH₂)₄-)ₒ, (-C₃H₆-O-C₃H₆-)ₒ, -(C₂H₄-O-C₂H₄-)ₚ oder deren Kombination, wobei entweder R¹ oder R² nicht -(CH₂)ₘ- Ist, und
R³ -(CH₂)ₘ-, -(C₂H₄-O-C₂H₄)ₒ- oder -(C₃H₆-O-C₃H₆)ₒ-,
B der Block eines Carboxyl-terminierten Polyesters oder B und R³ zusammen der Rest eines Polycaprolactons,
E der Block eines Poly(oxytetramethylen)glycols, Poly(oxypropylen)glycols, Poly(oxyethylen)glycols oder deren Copolymeren,
R⁴ ein C₁ bis C₁₂ - Alkyl- oder ein Rest eines Carboxyl-terminierten Polyesters nach Entfernen der Carboxylgruppen bedeuten und
n = 1 bis 30, m = 2 bis 12, o = 5 - 80 und p = 5 - 80 ist.

2. Schmelzklebstoffzusammensetzung nach Anspruch 1, **dadurch gekennzeichnet, daß** das Polyester-ether-Copolymer der Formel (II) im wesentlichen ein Blockcopolymer der Struktur E-B-E ist, wobei B der Block eines Carboxyl-terminierten Polyesters und E der Block eines Poly(oxytetramethylen)glycols ist.

3. Schmelzklebstoffzusammensetzung nach Anspruch 1, **dadurch gekennzeichnet, daß** das Polyester-ether-Copolymer der Formel (II) im wesentlichen ein Blockcopolymer der Struktur E-B-E ist, wobei B der Block eines Carboxyl-terminierten Polyesters und E der Block eines Poly(oxypropylen)glycols, Poly(oxyethylen)glycols oder deren Copolymeren ist.

4. Zusammensetzung nach Anspruch 2 oder 3, **dadurch gekennzeichnet, daß** der Carboxyl-terminierte Polyesterblock B aus aliphatischen oder aromatischen Dicarbonsäuren, ausgewählt aus Adipinsäure, Pimelinsäure, Korksäure, Azelainsäure, Sebacinsäure, Undecandisäure, Dodecandisäure, Phthalsäure, Terephthalsäure, Isophthalsäure oder deren Mischungen und difunktionellen Alkoholen ausgewählt aus Ethylenglycol, Propylenglycol, Butandiol, Diethylenglycol, Triethylenglycol, Dipropylenglycol, Tripropylenglycol, Hexandiol, Octandiol, Decandiol, Dodecandiol oder deren Mischungen aufgebaut ist.

5. Zusammensetzung nach Anspruch 4 **dadurch gekennzeichnet, daß** der Polyesterblock ein Molgewicht zwischen 600 und 10000, vorzugsweise zwischen 1000 und 6000 hat.

6. Zusammensetzung nach Anspruch 2 bis 5, **dadurch gekennzeichnet, daß** der Block E des Polyethers ein Molekulargewicht zwischen 200 und 15000, vorzugsweise zwischen 600 und 4000 hat.

7. Zusammensetzung nach mindestens einem der vorhergehenden Ansprüche, **dadurch gekennzeichnet, daß** das Polyesterpolyol der Komponente b.) aus aliphatischen Dicarbonsäuren ausgewählt aus Adipinsäure, Pimelinsäure, Korksäure, Azelainsäure, Sebacinsäure, Undecandisäure, Dodecandisäure, Dimersäure, 3,3-Dimethylglutarsäure, aromatischen Dicarbonsäuren ausgewählt aus Terephthalsäure, Isophthalsäure, Naphthalindicarbonsäure oder deren Mischungen und difunktionellen Alkoholen ausgewählt aus Ethylenglycol, Propylenglycol, Butandiol, Diethylenglycol, Triethylenglycol, Dipropylenenglycol, Tripropylenglycol, Hexandiol, Octandiol, Decandiol, Dodecandiol, Neopentylglycol, Dimerdiol, Hydroxypivalinsäureneopentyl-glycol oder deren Mischungen aufgebaut ist.

8. Zusammensetzung nach mindestens einem der vorhergehenden Ansprüche, **dadurch gekennzeichnet, daß** die Komponente c.) ein Polypropylenglycol, Polyethylenglycol, Copolymer aus Ethylenoxid und Propylenoxid oder ein Poly(oxytetramethylen)glycol ist.

9. Zusammensetzung nach mindestens einem der vorhergehenden Ansprüche, **dadurch gekennzeichnet, daß** sie
5 bis 100 Gew.% der Komponente a.)
0 bis 80 Gew.% der Komponente b.) und
0 bis 80 Gew.% der Komponente c.)
enthält.

## Claims

1. A polyurethane hot melt adhesive composition containing a reaction product of a polyisocyanate in stoichiometric excess
a) with a polyester-ether copolymer of formula (I) or (II)
HO-R²-[-O-A-O-R¹-]ₙ-OH (I)
HO-R³-B-E-B-R³-OH (II)
and
b) optionally with a polyesterpolyol and/or,
c) optionally with a polyetherpolyol,
wherein 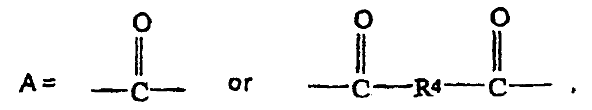
R¹ and R² independently of each other represent -(CH₂)ₘ-, (-(CH₂)₄-O-(CH₂)₄-)ₒ, (-C₃H₆-O-C₃H₆-)ₒ, (-C₂H₄-O-C₂H₄-)ₚ or a combination thereof, wherein either R¹ or R² is not -(CH₂)ₘ-,
and
R³ represents -(CH₂)ₘ-, -(C₂H₄-O-C₂H₄)ₒ- or -(C₃H₆-O-C₃H₆-)ₒ-,
B represents the block of a carboxyl-terminated polyester or B and R³ together represent the rest of a polycaprolactone,
E represents the block of a poly(oxytetramethylene) glycol, poly(oxypropylene) glycol, poly(oxyethylene) glycol or copolymers thereof,
R⁴ represents a C₁-C₁₂ alkyl or a rest of a carboxyl-terminated polyester after removal of the carboxyl groups and
n = 1-30, m = 2-12, o = 5-80, and p = 5-80.

2. The hot melt adhesive composition according to claim 1, **characterized in that** the polyester-ether copolymer of formula (II) substantially is a block copolymer of structure E-B-E, wherein B is the block of a carboxyl-terminated polyester, and E the block of a poly(oxytetramethylene)glycol.

3. The hot melt adhesive composition according to claim 1, **characterized in that** the polyester-ether copolymer of formula (II) substantially is a block copolymer of structure E-B-E, wherein B is the block of a carboxyl-terminated polyester, and E the block of a poly(oxypropylene)glycol, a poly(oxyethylene)glycol, or copolymers thereof.

4. The composition according to claim 2 or 3, **characterized in that** the carboxyl-terminated polyester block B is built up from aliphatic or aromatic dicarboxylic acids, selected from adipic acid, pimelic acid, suberic acid, azelaic acid, sebacic acid, undecanedioic acid, dodecanedioic acid, phthalic acid, terephthalic acid, isophthalic acid, or mixtures thereof, and from difunctional alcohols selected from ethylene glycol, propylene glycol, butanediol, diethylene glycol, triethylene glycol, dipropylene glycol, tripropylene glycol, hexanediol, octanediol, decanediol, dodecanediol, or mixtures thereof.

5. The composition according to claim 4, **characterized in that** the polyester block has a molar weight between 600 and 10,000, preferably between 1,004 and 6,000.

6. The composition according to claims 2 to 5, **characterized in that** block E of the polyether has a molecular weight between 200 and 15,000, preferably between 600 et 4,000.

7. The composition according to at least one of the preceding claims, **characterized in that** the polyesterpolyol of component b) is built up from aliphatic dicarboxylic acids selected from adipic acid, pimelic acid, suberic acid, azelaic acid, sebacic acid, undecanedioic acid, dodecanedioic acid, dimeric acid, 3,3-dimethylglutaric acid, from aromatic dicarboxylic acids selected from terephthalic acid, isophthalic acid, naphthalene-dicarboxylic acid or mixtures thereof, and from difunctional alcohols selected from ethylene glycol, propylene glycol, butanediol, diethylene glycol, triethylene glycol, dipropylene glycol, tripropylene glycol, hexanediol, octanediol, decanediol, dodecanediol, neopentyl glycol, dimeric diol or hydroxypivalic acid neopentyl glycol ester or mixtures thereof.

8. The composition according to at least one of the preceding claims, **characterized in that** component c) is a polypropylene glycol, polyethylene glycol, copolymer of ethylene oxide and propylene oxide, or a poly(oxytetramethylene) glycol.

9. The composition according to at least one of the preceding claims, **characterized in that** it contains
5-100% by weight of component a),
0-80% by weight of component b), and
0-80% by weight of component c).

## Revendications

1. Composition de colle fusible à base de polyuréthane contenant un produit de réaction d'un polyisocyanate en excès stoechiométrique
a) avec un copolymère polyester/éther de formule (I) ou (II)
HO-R²-[-O-A-O-R¹-]ₙ-OH (I)
HO-R³-B-E-B-R³-OH (II)
et
b) éventuellement avec un polyesterpolyol et/ou,
c) éventuellement avec un polyétherpolyol,
où 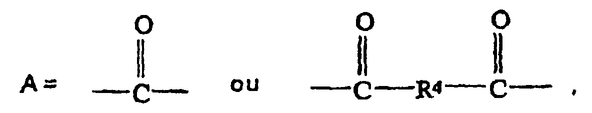
R¹ et R² représentent indépendamment l'un de l'autre, -(CH₂)ₘ-, (-(CH₂)₄-O-(CH₂)₄-)ₒ, (-C₃H₆-O-C₃H₆-)ₒ, (-C₂H₄-O-C₂H₄-)ₚ ou leur combinaison, où soit R¹, soit R² n'est pas -(CH₂)ₘ-,
et
R³ représente -(CH₂)ₘ-, -(C₂H₄-O-C₂H₄)ₒ- ou -(C₃H₆-O-C₃H₆-)ₒ-,
B représente la séquence d'un polyester à terminaison carboxyle ou bien B et
R³ représentent ensemble le résidu d'une polycaprolactone,
E représente la séquence d'un poly(oxytétraméthylène)glycol, d'un poly(oxypropylène)glycol, d'un poly(oxyéthylène)glycol ou leurs copolymères,
R⁴ représente un groupe alkyle en C₁ à C₁₂, ou un résidu d'un polyester à terminaison carboxyle après élimination des groupes carboxyle et
n vaut de 1 à 30, m vaut de 2 à 12, o vaut de 5 à 80, et p vaut de 5 à 80.

2. Composition de colle fusible selon la revendication 1, **caractérisée en ce que** le copolymère polyester/éther de formule (II) est essentiellement un copolymère séquencé de structure E-B-E, B étant la séquence d'un polyester à terminaison carboxyle, et E la séquence d'un poly(oxytétraméthylène)glycol.

3. Composition de colle fusible selon la revendication 1, **caractérisée en ce que** le copolymère polyester/éther de formule (II) est essentiellement un copolymère séquencé de structure E-B-E, B étant la séquence d'un polyester à terminaison carboxyle et E la séquence d'un poly(oxypropylène)glycol, d'un poly(oxyéthylène)glycol, ou de leurs copolymères.

4. Composition selon la revendication 2 ou 3, **caractérisée en ce que** la séquence polyester à terminaison carboxyle B est construite à partir d'acides dicarboxyliques aliphatiques ou aromatiques, choisis parmi l'acide adipique, l'acide pimélique, l'acide subérique, l'acide azélaïque, l'acide sébacique, l'acide undécanedioïque, l'acide dodécanedioïque, l'acide phtalique, l'acide téréphtalique, l'acide isophtalique, ou leurs mélanges, et d'alcools difonctionnels choisis parmi l'éthylèneglycol, le propylèneglycol, le butanediol, le diéthylèneglycol, le triéthylèneglycol, le dipropylèneglycol, le tripropylèneglycol, l'hexanediol, l'octanediol, le décanediol, le dodécanediol, ou leurs mélanges.

5. Composition selon la revendication 4, **caractérisée en ce que** la séquence polyester possède une masse molaire comprise entre 600 et 10 000, de préférence entre 1 000 et 6 000.

6. Composition selon les revendications 2 à 5, **caractérisée en ce que** la séquence E du polyéther possède une masse moléculaire comprise entre 200 et 15 000, de préférence entre 600 et 4 000.

7. Composition selon au moins l'une des revendications précédentes; **caractérisée en ce que** le polyesterpolyol du composant b) est construit à partir d'acides dicarboxyliques aliphatiques, choisis parmi l'acide adipique, l'acide pimélique, l'acide subérique, l'acide azélaïque, l'acide sébacique, l'acide undécanedioïque, l'acide dodécanedioïque, un acide dimère, l'acide 3,3-diméthylglutarique, d'acides dicarboxyliques aromatiques choisis parmi l'acide téréphtalique, l'acide isophtalique, l'acide naphtalène-dicarboxylique
ou leurs mélanges, et d'alcools difonctionnels choisis parmi l'éthylèneglycol, le propylèneglycol, le butanediol, le diéthylèneglycol, le triéthylèneglycol, le dipropylèneglycol, le tripropylèneglycol, l'hexanediol, l'octanediol, le décanediol, le dodécanediol, le néopentylglycol, un diol dimère, l'ester d'acide hydroxypivalique avec le néopentylglycol, ou leurs mélanges.

8. Composition selon au moins l'une des revendications précédentes, **caractérisée en ce que** le composant c) est un polypropylèneglycol, un polyéthylèneglycol, un copolymère d'oxyde d'éthylène et d'oxyde de propylène, ou un poly(oxytétraméthylène)glycol.

9. Composition selon au moins l'une des revendications précédentes, **caractérisée en ce qu'**elle contient
5 à 100% en poids du composant a),
0 à 80% en poids du composant b), et
0 à 80% en poids du composant c).
